(19)

Europäisches
Patentamt
European
Patent Office
Office européen
des brevets

(11) **EP 4 151 602 A1**

(12) **EUROPEAN PATENT APPLICATION**

(43) Date of publication:
**22.03.2023 Bulletin 2023/12**

(21) Application number: **22191015.1**

(22) Date of filing: **18.08.2022**

(51) International Patent Classification (IPC):
***C01G 51/00*** *(2006.01)* ***H01M 4/525*** *(2010.01)*

(52) Cooperative Patent Classification (CPC):
**C01G 51/50; C01G 51/006; C01G 51/42; H01M 4/525;** C01P 2002/74; C01P 2004/03; C01P 2004/34; C01P 2004/61; C01P 2006/12; C01P 2006/16; C01P 2006/20; C01P 2006/40

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.08.2021 KR 20210108960**

(71) Applicant: **Samsung SDI Co., Ltd.
Yongin-si, Gyeonggi-do 17084 (KR)**

(72) Inventors:
• **LEE, Jangwook**
  **17084 Yongin-si (KR)**
• **YANG, Wooyoung**
  **17084 Yongin-si (KR)**
• **CHOI, Ickkyu**
  **17084 Yongin-si (KR)**

(74) Representative: **Marks & Clerk LLP
15 Fetter Lane
London EC4A 1BW (GB)**

(54) **CATHODE ACTIVE MATERIAL FOR LITHIUM SECONDARY BATTERIES, METHOD OF PREPARING SAME, CATHODE INCLUDING THE SAME, AND LITHIUM SECONDARY BATTERY INCLUDING CATHODE**

(57) Provided are a cathode active material for lithium secondary batteries, a method of preparing the same, a cathode including the same, and a lithium secondary battery including the cathode, the cathode active material including: nickel-based lithium metal oxide secondary particles each including a plurality of large primary particles, the secondary particles having a hollow structure having pores therein, each of the large primary particles having a size of about 2 $\mu$m to about 6 $\mu$m, and each of the secondary particles having a size of about 10 $\mu$m to about 18 $\mu$m; and a cobalt compound-containing coating layer arranged on surfaces of the nickel-based lithium metal oxide secondary particles.

FIG. 1A

EP 4 151 602 A1

**Description**

BACKGROUND

1. Field

One or more embodiments relate to a cathode active material for lithium secondary batteries, a method of preparing the same, a cathode including the same, and a lithium secondary battery including the cathode.

2. Description of the Related Art

With the advance of portable electronic devices and communication devices, the need for the development of lithium secondary batteries having high energy density is high. However, a lithium secondary battery having high energy density may have poor safety, and thus improvement in this regard is required.

In order to manufacture a lithium secondary battery with a long lifespan and reduced gas, the use of a single-crystal cathode active material as a cathode active material for a lithium secondary battery is being examined. A single-crystal cathode active material has a problem in that particle aggregation occurs or productivity is reduced due to heat treatment at a high temperature for single crystallization.

In order to solve the particle aggregation of single-crystal cathode active materials, a pulverization process is performed when a single-crystal cathode active material is used. However, when a pulverization process is performed in this way, crystallinity of the cathode active material is deteriorated, surface defects thereof occur, and residual pulverized materials thereof are produced as impurities, and thus improvement in this regard is required.

SUMMARY

One or more embodiments provide a cathode active material for lithium secondary batteries in which aggregation between particles is suppressed and a cation mixing ratio is reduced.

One or more embodiments provide a method of preparing the cathode active material.

One or more embodiments provide a cathode including the cathode active material.

One or more embodiments provide a lithium secondary battery including the cathode.

Additional aspects will be set forth in part in the description which follows and, in part, will be apparent from the description, or may be learned by practice of the presented embodiments of the disclosure.

One or more embodiments provide a cathode active material for lithium secondary batteries, the cathode active material including: nickel-based lithium metal oxide secondary particles each including a plurality of large (e.g. single-crystal) primary particles, the secondary particles having a hollow structure having pores therein, the large (e.g. single-crystal) primary particles having a size of about 2 $\mu$m to about 6 $\mu$m, and each of the secondary particles having a size of about 10 $\mu$m to about 18 $\mu$m; and a cobalt compound-containing coating layer arranged on surfaces of the nickel-based lithium metal oxide secondary particles.

One or more embodiments provide a method of preparing a cathode active material for lithium secondary batteries, the method including: mixing a nickel precursor, at least one selected from an M1 precursor and an M2 precursor, and a basic solution to obtain a mixture, subjecting the mixture to a co-precipitation reaction, and then drying the mixture to obtain a nickel-based metal precursor having pores therein;

> obtaining a mixture of the nickel-based metal precursor having pores therein and a lithium precursor;
> performing primary heat treatment of the mixture to obtain a product of the primary heat treatment; and
> adding a cobalt precursor to the product of the primary heat treatment without a pulverization process of the product to obtain a mixture, and performing secondary treatment of the mixture to prepare the above-described cathode active material,
> wherein the primary heat treatment is performed at a higher temperature than the secondary heat treatment,
> the M1 precursor is at least one selected from a cobalt precursor, a manganese precursor, and an aluminium precursor, and
> the M2 precursor is a precursor containing at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr).

One or more embodiments provide a cathode for lithium secondary batteries, the cathode including: a cathode current collector; and a cathode active material layer on the cathode current collector,
wherein the cathode active material layer includes the above-described cathode active material, and at least one selected from large (e.g. single-crystal) particles and aggregates thereof, the large (e.g. single-crystal) particles having the same composition as the cathode active material.

One or more embodiments provide a lithium secondary battery including: the above-described cathode; an anode; and an electrolyte between the cathode and the anode.

At least some of the above and other features of the invention are set out in the claims.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1A is a scanning electron microscope (SEM) photograph of a cross-section of a cathode active material prepared according to Example 1;

FIG. 1B schematically illustrates the structure of a hollow cathode active material having a one-layer structure according to an embodiment;

FIG. 1C schematically illustrates the structure of a hollow cathode active material having a two-layer structure according to an embodiment;

FIG. 2A is a scanning electron microscope photograph of a cross-section of a cathode active material prepared according to Comparative Example 2;

FIG. 2B is a scanning electron microscope photograph of a cross-section of a cathode active material prepared according to Comparative Example 4;

FIG. 2C is a scanning electron microscope photograph of a cross-section of a nickel-based metal precursor prepared according to Preparation Example 1;

FIG. 2D is a scanning electron microscope photograph of a cross-section of a nickel-based metal precursor prepared according to Comparative Preparation Example 1;

FIGS. 3A and 3B illustrate a state before pressing is performed when manufacturing a cathode according to Manufacturing Example 1;

FIG. 3C illustrates a state after pressing is performed when manufacturing a cathode according to Manufacturing Example 1;

FIG. 3D illustrates a state after pressing is performed when manufacturing a cathode according to Comparative Manufacturing Example 4;

FIG. 4 is a schematic view of a lithium secondary battery according to an embodiment;

FIG. 5 illustrates the results of energy-dispersive spectroscopy (EDS) of a cathode active material of Example 1, in which the concentration distribution of cobalt ions in the cathode active material was measured by energy-dispersive spectroscopy (EDS); and

FIG. 6 is a view illustrating the results of energy-dispersive spectroscopy analysis of a cathode active material of Comparative Example 1.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, a cathode active material for lithium secondary batteries according to an embodiment, a preparation method thereof, a cathode including the same, and a lithium secondary battery including the cathode will be described in detail.

In order to manufacture a lithium secondary battery having improved lifespan characteristics, a cathode containing a single-crystal cathode active material is used. Single-crystal cathode active material undergoes a process of high-temperature heat treatment by injecting an excessive amount of lithium during manufacturing. In this case, due to high-temperature heat treatment, particles aggregate or productivity decreases and residual lithium increases. In addition, when a lithium secondary battery is manufactured using such a single-crystal cathode active material, capacity and charging/discharging efficiency are reduced.

In the single-crystal cathode active material, particle aggregation occurs, so that a pulverization process should be performed when manufacturing a cathode. After such a pulverization process, single-crystal properties of the cathode active material are deteriorated, residual pulverized products are generated, and surface resistance thereof becomes high, so improvements therefor are required.

Accordingly, the present inventors have completed the present disclosure for a one-body particle cathode active material having improved surface resistance properties, which does not require a pulverization process because particle aggregation does not occur, by solving the above problems.

A cathode active material for lithium secondary batteries according to an embodiment includes: nickel-based lithium metal oxide secondary particles each including a plurality of large primary particles, the secondary particles (i.e., the nickel-based lithium metal oxide secondary particles) having a hollow structure having pores therein, the large primary particles having a size of about 2 $\mu$m to about 6 $\mu$m, and each of the secondary particles having a size of about 10 $\mu$m to about 18 $\mu$m; and a cobalt compound-containing coating layer arranged on surfaces of the nickel-based lithium metal oxide secondary particles.

In the present specification, when particles are spherical, "size" indicates an average particle diameter, and when the particles are non-spherical, the "size" indicates a major axis length (e.g., an average major axis length). The size of the particles may be measured using a scanning electron microscope or a particle size analyzer. As the particle size analyzer, for example, HORIBA, LA-950 laser particle size analyzer, may be used. When the size of the particles is measured using a particle size analyzer, the average particle diameter is referred to as D50. D50 refers to the average diameter of particles whose cumulative volume corresponds to 50 vol% in the particle size distribution, and refers to the value of the particle size corresponding to 50% from the smallest particle when the total number of particles is 100% in the distribution curve accumulated in the order of the smallest particle size to the largest particle size.

When the cathode active material includes a cobalt compound-containing coating layer, surface resistance characteristics are improved. A lithium secondary battery including a cathode using the same has improved lifespan characteristics.

In the cathode active material according to an embodiment, the secondary particles may include a large primary particle layer within two layers.

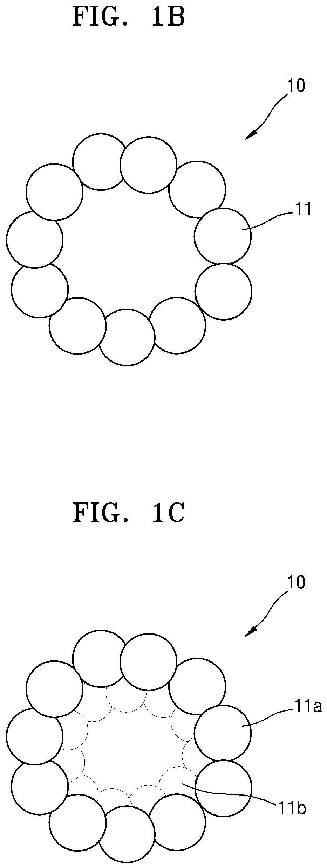

The cathode active material 10 according to an embodiment is a secondary particle, and as shown in FIG. 1B, includes a hollow large primary particle layer having a single-layer structure. The hollow large primary particle layer contains primary particles 11.

As shown in FIG. 1C, the cathode active material 10 according to another embodiment includes a hollow large primary particle layer having a two-layer structure. Due to such a structure, a breaking process may be easily performed during pressing. In FIG. 1C, reference numerals 11a and 11b denote first primary particles and second primary particles, respectively, which respectively form a primary particle layer arranged on the first layer and a primary particle layer arranged on the second layer.

The cathode active material according to an embodiment has a cluster structure that is easily broken by pressing for manufacturing a cathode, and thus does not require a pulverization process. When such a cathode active material is used, a cathode having a form in which a conductive agent and a binder are continuously connected in a cathode plate may be manufactured.

The cathode active material according to an embodiment may include a plurality of large primary particles that are partially broken during a pressing process, and secondary particles each being an aggregate of the primary particles.

In the cathode active material according to an embodiment, the size of the primary particles is about 2 $\mu$m to about 6 $\mu$m, for example, about 2 $\mu$m to about 4 $\mu$m, or about 2 $\mu$m to about 3.5 $\mu$m, and the size of the secondary particles is about 10 $\mu$m to about 18 $\mu$m, for example, about 12 $\mu$m to about 18 $\mu$m, or about 12 $\mu$m to about 14 $\mu$m. In addition, the size of pores inside the cathode active material may be about 2 $\mu$m to about 7 $\mu$m, about 2 $\mu$m to about 5 $\mu$m, or about 2.5 $\mu$m to about 4 $\mu$m. When the size of the primary particles, the size of the secondary particles, and the size of the pores are within the above ranges, respectively, a cathode active material having excellent capacity characteristics may be obtained. As used herein, the size of pores may be measured using mercury intrusion method, gas adsorption method such as BET (Brunauer, Emmett and Teller) or BJH (Barrett-Joyner-Halenda), SEM, or the like, and the term "the size of pores" may mean average pore size. For pore size analysis, mercury intrusion method or gas adsorption method is mainly used, and the generally known pore measurement method is used. The measurement by SEM uses image analysis. For pore size analysis of the embodiment, a gas adsorption method such as BET (Brunauer, Emmett, Teller) was used.

As used herein, the term "inside" of the cathode active material refers to a region of 50 vol% to 70 vol%, for example, 60 vol% of the total volume from the center of the cathode active material to the surface of the cathode active material, or refers to a remaining region excluding the region (outside) within 3 $\mu$m from the outermost surface of the cathode active material in the total distance from the center of the cathode active material to the surface of the cathode active material.

In the cathode active material according to an embodiment, a cobalt compound-containing coating layer may be formed on at least one of the surfaces and grain boundaries of the plurality of primary particles.

The cobalt compound-containing coating layer may coat all or part of the surface of the cathode active material.

For example, the coating layer may coat 90% or less, 80% or less, 70% or less, 60% or less, 50% or less, 40% or less, 30% or less, 20% or less, 10% or less, or 1% to 10% of the surface of the cathode active material.

The content of a cobalt compound in the coating layer may be 0.1 mol% to 5.0 mol%, 0.5 mol% to 5.0 mol%, 1 mol% to 4 mol%, or 1.5 mol% to 3 mol% based on the total content (100 mol%) of the cathode active material. When the content of the cobalt compound is within the above range, in the synthesis process of the cathode active material, the reactivity between an electrolyte and the interface of the cathode active material may be decreased by reducing $Ni^{3+}$ included in a metal layer in a large amount into $Ni^{2+}$ and $Co^{4+}$ included in the metal layer in a large amount into $Co^{3+}/Co^{2+}$ or reducing the two types of ions at the same time.

The cobalt compound-containing coating layer may include cobalt oxide, lithium cobalt oxide, or a combination thereof. In addition, the cobalt compound-containing coating layer may further include at least one selected from boron, manganese, phosphorus, aluminium, zinc, zirconium, and titanium.

The coating layer may have a thickness of about 1 nm to about 50 nm, about 5 nm to about 45 nm, or about 10 nm to about 35 nm. When the thickness of the coating layer is within the above range a cathode active material having improved surface resistance characteristics may be obtained.

The nickel-based lithium metal oxide may be a compound represented by Formula 1 below.

$$[\text{Formula 1}] \qquad Li_a(Ni_{1-x-y}M1_xM2_y)O_{2\pm\alpha1}$$

in Formula 1, M1 is at least one element selected from Co, Mn, and Al,

M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),

$0.95 \leq a \leq 1.1$, $0.6 \leq (1-x-y) < 1$, $0 \leq x < 0.4$, $0 \leq y < 0.4$, and $0 \leq \alpha1 \leq 0.1$ are satisfied, and the case where both x and y are 0 is excluded.

The nickel-based lithium metal oxide may be, for example, a compound represented by Formula 2 below.

$$[\text{Formula 2}] \qquad Li_a(Ni_{1-x-y-z}Co_xM3_yM4_z)O_{2\pm\alpha1}$$

in Formula 2, M3 is at least one element selected from Mn and Al,

M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),

$0.95 \leq a \leq 1.1$, $0.6 \leq (1-x-y-z) < 1$, $0 \leq x < 0.4$, $0 \leq y < 0.4$, $0 \leq z < 0.4$, and $0 \leq \alpha1 \leq 0.1$ are satisfied, and the case where all of x, y, and z are 0 is excluded.

The expression " the case where all of x, y, and z are 0 " represents "the case where x, y, and z are all 0".

The peak intensity ratio ($I_{(003)}/I_{(104)}$) of the cathode active material according to an embodiment, measured by X-ray diffraction analysis using Cu K$\alpha$ radiation (1.54056Å), may be about 1.2 to about 4.0, about 1.2 to about 2.0, about 1.3 to about 1.8, about 1.3 to about 1.6, or about 1.3 to about 1.4. When the peak intensity ratio ($I_{(003)}/I_{(104)}$) is within the above range, the stability of the crystal structure of the cathode active material may be improved.

According to another embodiment, in the case of a cathode active material having a nickel content of 88 mol% (based on the total amount of metals other than lithium), the peak intensity ratio ($I_{(003)}/I_{(104)}$) thereof may be about 1.2 to about 1.4, and in the case of a cathode active material having a nickel content of 93 mol% (based on the total amount of metals other than lithium), the peak intensity ratio (I(003)/I(104)) thereof may be about 1.3 to about 2.0.

When the peak intensity ratios I(003)/I(104) of the cathode active material and the electrode plate including the cathode active material are within the above ranges, the stability of the crystal structure of the cathode active material is improved, and the expansion rate and contraction rate of the cathode active material according to the absorption/desorption of lithium may be improved. Accordingly, the capacity characteristics of a battery may be improved.

In the X-ray diffraction analysis, the peak intensities I(003) and 1(104) mean the intensity I(003) of the (003) plane peak and the intensity 1(104) of the (104) plane peak, respectively. In addition, the peak intensity ratio ($I_{(903)}/I_{(104)}$, which is an intensity ratio of the (003) plane peak and the (104) plane peak, is a parameter made to evaluate the degree of uniform orientation of grains, and may evaluate the degree of cation mixing or cation exchange. Specifically, the (104) plane represents a plane perpendicular to the plane of a lithium-ion movement path. In particular, as the degree of orientation of a crystal plane having a layered structure increases, the peak intensity of the (104) plane decreases. Accordingly, the higher the orientation, the more the same crystal orientation plane increases, so the peak intensity of the (104) plane decreases, and thus the peak intensity ratio ($I_{(903)}/I_{(104)}$ increases. That is, it means that as the peak intensity ratio ($I_{(003)}/I_{(104)}$ increases, a stable cathode active material structure is formed.

The area ratio ($A_{(003)}/A_{(104)}$)) of the area of the (003) plane peak to the area of the (104) plane peak, measured by X-ray diffraction analysis of the cathode active material according to an embodiment, may be about 1.1 to about 1.4, about 1.12 to about 1.38, about 1.15 to about 1.35, or about 1.2 to about 1.3.

When measuring the peak intensity ratio $I_{(903)}/I_{(104)}$ by X-ray diffraction analysis for a cathode according to an embodiment, the peak intensity ratio is equal to the peak intensity ratio $I_{(003)}/I_{(104)}$ measured by X-ray diffraction analysis for the cathode active material contained in the cathode.

The cathode active material of the present disclosure may have a $FWHM_{(003)}$ of 0.079° to 0.082°, for example, 0.081°, and a ratio of $FWHM_{(003)}/FWHM_{(104)}$ of 0.800 to 0.900, for example, 0.850. Thus, it may be found that the cathode active material is a crystal material. Here, $FWHM_{(003)}$ represents a full width at half maximum (FWHM) of a peak corresponding to the (003) plane, and $FWHM_{(104)}$ represents a full width at half maximum of the peak corresponding to the (104) plane.

In addition, it may be found that the cathode active material according to an embodiment is a crystal material by checking grains and grain boundaries of a sub-micro scale or higher when cross-sectional microstructures are observed through a scanning electron microscope.

When the area ratio (A(003)/A(104)) and peak intensity ratio $I_{(003)}/I_{(104)}$ of the cathode active material and the electrode plate including the cathode active material are within the above ranges, the stability of the crystal structure of the cathode active material is improved, and the expansion rate and contraction rate of the cathode active material according to the absorption/desorption of lithium may be improved. Accordingly, the capacity characteristics of a battery may be improved.

Hereinafter, a method of preparing a cathode active material according to an embodiment will be described.

First, a mixture obtained by mixing a nickel precursor, at least one metal precursor selected from an M1 precursor and an M2 precursor, and a basic solution is subjected to a co-precipitation reaction, and then dried to obtain a nickel-based metal precursor having pores therein. The nickel-based metal precursor has amorphous properties.

The M1 precursor is the same as M1 of Formula 1, and is at least one selected from a cobalt precursor, a manganese precursor, and an aluminium precursor. In addition, the M2 precursor is the same as M2 of Formula 1, and is a precursor containing at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr).

The metal precursor may be, for example, at least one selected from a cobalt precursor, a manganese precursor, and the M2 metal precursor.

During the co-precipitation reaction, the pH of the mixture may be adjusted in two steps. The first step is a pore formation step, and the pH of the mixture may be adjusted to 11.5 to 12.0. The second step is a particle growth step, and the pH of the mixture may be adjusted to, for example, 10.5 to 11.9. The second step is carried out at a lower pH than the first step. A difference in synthesis rate between the inside and outside of the nickel-based metal precursor is caused by changing a co-precipitation rate in this way. As a result, a nickel-based metal precursor having pores therein may be obtained. Here, the nickel-based metal precursor refers to a precursor for obtaining a nickel-based lithium metal oxide.

In the first step, for example, the pH of the mixture may be adjusted to 11.6 to 11.9 or 11.7 to 11.8. In the second step, for example, the pH of the mixture may be adjusted in the range of 10.8 to 11.7, 11.0 to 11.7, 11.2 to 11.6, or 11.3 to 11.6. A difference in pH between the first step and the second step may be about 0.1 to 1.5, 0.1 to 1.0, 0.1 to 0.8, 0.1 to 0.6, 0.1 to 0.5, 0.1 to 0.3, or 0.1 to 0.2. As such, by reducing the pH of the mixture in the second step to the above-described difference compared to the pH of the mixture in the first step, the co-precipitation rate is changed, thereby generating a difference in synthesis rate between the inside and outside of the nickel-based metal precursor. As a result, a nickel-based metal precursor having pores therein may be obtained. Here, the nickel-based metal precursor refers to a precursor for obtaining a nickel-based lithium metal oxide.

The stirring time of the mixture in the first step may be changed depending on the pH conditions of the first step, but may be, for example, in the range of 8 hours to 12 hours or 9 hours to 10 hours.

In the present disclosure, the above-described co-precipitation reaction proceeds at a faster rate than that in a general method of preparing a cathode active material precursor, so that the pore dispersion of a core is controlled to be high, and thus a cathode active material may be easily manufactured without performing a separate pulverization process for the cathode active material, thereby improving productivity. When pore dispersion is controlled to be high, an active material has more pores after heat treatment, so that the active material is easily broken during pressing, so that a cathode including the active material has excellent electrochemical properties. Here, it is possible to perform the co-precipitation at a high speed by adjusting stirring time to be short while stirring speed is fast.

The metal precursor having pores therein, like the cathode active material, includes secondary particles each containing a plurality of primary particles, and has a hollow structure having pores therein. The secondary particles have a size of about 10 $\mu$m to about 18 $\mu$m. The primary particles have a size of about 0.2 $\mu$m to about 0.3 $\mu$m.

The above-described nickel-based metal precursor having pores therein exhibits amorphous characteristics, and includes an inside having pores and an outside having a denser structure than the interior. The amorphous characteristics of the nickel-based metal precursor may be confirmed by X-ray diffraction analysis.

As used herein, the "inside" of the nickel-based metal precursor refers to a pore region in which a large number of pores exist, and refers to a region of 50 vol% to 70 vol%, for example, 60 vol% from the center of the total volume from the center of the precursor to the surface of the precursor, or a remaining region except for the region (outside) within 3 $\mu$m from the outermost surface of the cathode active material in the total distance from the center of the precursor to the surface of the precursor.

According to another embodiment, the inside of the nickel-based metal precursor is a pore region, and may represent a region having a major axis length of about 2 $\mu$m to about 7 $\mu$m, for example, about 3.5 $\mu$m to about 5 $\mu$m.

In the metal precursor having pores therein, the size of the pore region may be about 2 $\mu$m to about 7 $\mu$m, and the size of the secondary particles may be about 10 $\mu$m to about 18 $\mu$m, 10 $\mu$m to about 15 $\mu$m, or about 11 $\mu$m to about 14 $\mu$m. When the size of the pore region of the metal precursor and the size of the secondary particles are within the above ranges, respectively, a cathode active material having excellent phase stability and improved capacity characteristics may be obtained.

The mixture may include a complexing agent, a pH adjuster, and the like.

The pH adjuster serves to lower the solubility of metal ions in a reactor such that the metal ions are precipitated as hydroxides. The pH adjuster is, for example, ammonium hydroxide, sodium hydroxide (NaOH), sodium carbonate ($Na_2CO_3$), or the like. The pH adjuster is, for example, sodium hydroxide (NaOH).

The complexing agent serves to control the formation rate of precipitates in the co-precipitation reaction. The complexing agent is, for example, ammonium hydroxide ($NH_4OH$) (ammonia water), citric acid, acrylic acid, tartaric acid, glycolic acid, or the like. The content of the complexing agent may be used at any suitable amount generally used in the art for complexing agents. The complexing agent is, for example, ammonia water.

A desired nickel-based precursor may be obtained by washing and drying the product obtained according to the co-precipitation reaction. Here, the drying is carried out under conventional conditions.

The above-described nickel precursor and at least one metal precursor selected from the M1 precursor and the M2 precursor include, for example, a nickel precursor, a manganese precursor, and a cobalt precursor. Alternatively, the metal precursor includes, for example, a nickel precursor, a cobalt precursor, and an aluminium precursor.

Examples of the nickel precursor may include $Ni(OH)_2$, $NiO$, $NiOOH$, $NiCO_3 \cdot 2Ni(OH)_2 \cdot 4H_2O$, $NiC_2O_4 \cdot 2H_2O$, $Ni(NO_3)_2 \cdot 6H_2O$, $NiSO_4$, $NiSO_4 \cdot 6H_2O$, fatty acid nickel salts, nickel halide, and combinations thereof. Examples of the manganese precursor may include manganese oxides such as $Mn_2O_3$, $MnO_2$, and $Mn_3O_4$, manganese salts such as $MnCO_3$, $Mn(NO_3)_2$, $MnSO_4$, , $MnSO_4 \cdot H_2O$, manganese acetate, manganese dicarboxylate, manganese citrate, and fatty acid manganese salts, manganese oxyhydroxide, manganese halides such as manganese chloride and combinations thereof.

Examples of the cobalt precursor may include $Co(OH)_2$, $CoOOH$, $CoO$, $CO_2O_3$, $CO_3O_4$, $Co(OCOCH_3)_2 \cdot 4H_2O$, $CoCl_2$, $Co(NO_3)_2.6H_2O$, $CoSO_4$, $CO(SO_4)_2 \cdot 7H_2O$, and combinations thereof.

Examples of the aluminium precursor may include aluminium hydroxide, aluminium chloride, aluminium oxide, and combinations thereof.

In the above-described M2 precursor, the precursor containing each element may be a salt, hydroxide, oxyhydroxide, halide, each containing each element, or a combination thereof. Here, the above-described salt containing each element may include at least one selected from sulfate, alkoxide, oxalate, phosphate, halide, oxyhalide, sulfide, oxide, peroxide, acetate, nitrate, carbonate, citrate, phthalate, and perchlorate, each containing the above-described element.

The content of the nickel precursor and the content of at least one metal precursor selected from the M1 precursor and the M2 precursor are stoichiometrically controlled so that the desired nickel-based metal precursor is obtained.

The nickel-based metal precursor may be a compound represented by Formula 3 below,

a compound represented by Formula 4 below, or a combination thereof.

[Formula 3] $\quad (Ni_{1-x-y}M1_xM2_y)(OH)_2$

in Formula 3, M1 is at least one element selected from Co, Mn, and Al,
M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and
$0.6 \leq (1-x-y) < 1$, $0 \leq x < 0.4$, and $0 \leq y < 0.4$ are satisfied, and a case where both x and y are 0 is excluded, and

[Formula 4] $\quad (Ni_{1-x-y}M1_xM2_y)O$

in Formula 4, M1 is at least one element selected from Co, Mn, and Al,

M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and

$0.6 \leq (1-x-y) < 1$, $0 \leq x < 0.4$, and $0 \leq y < 0.4$ are satisfied, and a case where both x and y are 0 is excluded.

The nickel-based metal precursor is, for example, a compound represented by Formula 5 below, a compound represented by Formula 6 below, or a combination thereof.

[Formula 5]     $Ni_{1-x-y-z}Co_xM3_yM4_z(OH)_2$

in Formula 5, M3 is at least one element selected from Mn, and Al,

M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and

$0.6 \leq (1-x-y-z) < 1$, $0 \leq x < 0.4$, $0 \leq y < 0.4$, and $0 \leq z < 0.4$ are satisfied, and a case where all of x, y, and z are 0 is excluded, and

[Formula 6]     $(Ni_{1-x-y-z}Co_xM3_yM4_z)O$

wherein, in Formula 6, M3 is at least one element selected from Mn, and Al,

M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and

$0.6 \leq (1-x-y-z) < 1$, $0 \leq x < 0.4$, $0 \leq y < 0.4$, and $0 \leq z < 0.4$ are satisfied, and a case where all of x, y, and z are 0 is excluded.

The nickel-based metal precursor may be, for example, a compound represented by Formula 7 below,

a compound represented by Formula 8 below, or a combination thereof.

[Formula 7]     $Ni_{1-x-y-z}Co_xMn_yM4_z(OH)_2$

in Formula 7, M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and

$0.6 \leq (1-x-y-z) < 1$, $0 \leq x < 0.4$, $0 \leq y < 0.4$, and $0 \leq z < 0.4$ are satisfied, and a case where all of x, y, and z are 0 is excluded, and

[Formula 8]     $(Ni_{1-x-y-z}CO_xAl_yM4_z)O$

in Formula 8, M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and

$0.6 \leq (1-x-y-z) < 1$, $0 \leq x < 0.4$, $0 \leq y < 0.4$, and $0 \leq z < 0.4$ are satisfied, and a case where all of x, y, and z are 0 is excluded.

Then, a mixture of the nickel-based metal precursor having pores therein and the lithium precursor is obtained.

The mixing ratio of the lithium precursor and the nickel-based metal precursor is stoichiometrically adjusted so as to prepare a desired cathode active material. Primary heat treatment of the mixture is performed. Phase transition and grain growth proceed through the primary heat treatment to prepare a primary heat-treated product.

A cobalt precursor is added to the primary heat-treated product without a pulverization process of the product to obtain a mixture. The cobalt precursor is used when forming a cobalt compound-containing coating layer on the surface of the nickel-based lithium metal oxide.

As used herein, the "pulverization" proceeds using equipment such as a jet mill that applies a strong force (pneumatic pressure, mechanical pressure, or the like) to remove the strong aggregation of the primary particles constituting the secondary particle.

Secondary heat treatment is performed on the mixture obtained according to the above process to prepare a cathode active material according to an embodiment.

The secondary heat treatment is performed at a lower temperature than the primary heat treatment, and crystallinity is recovered when the secondary heat treatment is performed. If the secondary heat treatment is performed at a higher temperature than the first heat treatment, it is difficult to obtain a large particle having excellent phase stability. In addition, in the manufacturing method, when the primary heat-treated product is subjected to a pulverization process, it is difficult to obtain a cathode active material having a hollow structure.

The nickel-based metal precursor and the lithium precursor may be mixed such that a molar ratio of Li/Me (where Me is, e.g., an element other than Li, O, and H) is 0.9 or more and less than 1.1, more than 1.0 and less than 1.1, 1.01 to 1.05, or 1.02 to 1.04. The mixing process of the nickel-based metal precursor and the lithium precursor may be carried out by two processes, not one process. For example, in the first mixing, the amount of the nickel-based metal precursor and the lithium precursor may be controlled such that the molar ratio of Li/Me (metal other than Li) is 0.9, and in the second mixing, the amount of the nickel-based metal precursor and the lithium precursor may be controlled such that the molar ratio of Li/Me (where Me is, e.g., an element other than Li, O, and H) is 0.5.

The lithium precursor may be, for example, lithium hydroxide, lithium carbonate, lithium sulfate, lithium nitrate, or a combination thereof.

The primary heat treatment may be performed at a temperature of 800 °C to 1200 °C, 830 °C to 1150 °C, 850 °C to 1100 °C, 850 °C to 950 °C, or 870 °C to 920 °C under an oxidizing gas atmosphere, and the secondary heat treatment is performed at a temperature of 600 °C to 850 °C, 600 °C to 800 °C, 650 °C to 800 °C, 700 °C to 800 °C, or 720 °C to 790 °C under an oxidizing gas atmosphere. When the primary heat treatment and the secondary heat treatment are performed under the above conditions, a high-density and long-lifespan lithium secondary battery may be manufactured.

The primary heat treatment time is changed depending on the primary heat treatment temperature, for example, the primary heat treatment may be carried out for about 8 hours to about 20 hours.

The oxidizing gas atmosphere uses an oxidizing gas such as oxygen or air, for example, the oxidizing gas includes 10 vol% to 20 vol% of oxygen or air and 80 vol% to 90 vol% of an inert gas.

A disintegration process may be further performed between the primary heat treatment and the secondary heat treatment. Through this disintegration process, a particle aggregation phenomenon is further resolved, so that a high-density and long-lifespan lithium secondary battery may be manufactured.

As used herein, the "disintegration" is generally performed using equipment such as a cutter mill, roll crusher, and ball mill to remove weak agglomeration between secondary particles. This disintegration process is carried out through dispersion to an appropriate size using a rotary impact mill, a cutter mill, a ball mill, or a bead mill, each being provided with a built-in classification device such as a screen. As used herein, "disintegration" refers to a process of dispersing a material aggregated with a relatively weak force, such as a particle aggregate or a granulated product.

According to one embodiment, the disintegration may be carried out at a rotation speed of about 100 rpm to about 300 rpm, about 100 rpm to about 250 rpm, or about 120 rpm to about 275 rpm using roll crushers. The interval between the roll crushers may be about 1 mm to about 3 mm, about 1.2 mm to about 2.8 mm, or about 1.5 mm. Stirring time for the disintegration is changed depending on disintegration conditions, but the disintegration may generally be performed for about 10 seconds to about 60 seconds.

Examples of the cobalt precursor used when forming a cobalt compound-containing coating layer include hydroxide, sulfate, alkoxide, oxalate, phosphate, halide, oxyhalide, sulfide, oxide, peroxide, acetate, nitrate, carbonate, citrate, phthalate, perchlorate, and combinations thereof. For example, the cobalt precursor may include at least one compound selected from $Co_3O_4$, $Co(OH)_2$, $CoO$, $CoOOH$, $Co(OCOCH_3)_2 \cdot 4H_2O$, $Co(NO_3)_2 \cdot 6H_2O$, and $Co(SO_4)_2 \cdot 7H_2O$.

The content of the cobalt precursor is stoichiometrically controlled such that the content of a cobalt compound contained in the cobalt compound-containing coating layer may be about 0.1 mol% to about 5.0 mol% (e.g. about 0.5 mol% to about 5.0 mol%) based on the total content of the cathode active material.

The mixing of the nickel-based metal precursor and the lithium precursor may be dry mixing, and may be performed using a mixer or the like. The dry mixing may be performed using milling. Milling conditions are not particularly limited, but the mixing may be carried out such that there is little deformation such as micronization of the precursor used as a starting material. The size of the lithium precursor mixed with the nickel-based metal precursor may be controlled in advance. The size (average particle diameter) of the lithium precursor may be in the range of about 5 $\mu$m to about 15 $\mu$m, for example, about 10 $\mu$m. A required mixture may be obtained by milling the lithium precursor having this size and the nickel-based metal precursor at a rotation speed of about 300 rpm to about 3,000 rpm. When the internal temperature of the mixer rises to 30°C or higher during the milling process, a cooling process may be performed to maintain the internal temperature of the mixer within a range of room temperature (25 °C).

The nickel-based metal precursor may be, for example, $Ni_{0.92}Co_{0.06}Mn_{0.02}(OH)_2$, $Ni_{0.92}Co_{0.05}Al_{0.03}(OH)_2$, $Ni_{0.94}Co_{0.03}Al_{0.03}(OH)_2$, $Ni_{0.88}Co_{0.06}Al_{0.06}(OH)_2$, $Ni_{0.96}Co_{0.02}Al_{0.02}(OH)_2$, $Ni_{0.93}Co_{0.04}Al_{0.03}(OH)_2$, $Ni_{0.8}Co_{0.15}Al_{0.05}(OH)_2$, $Ni_{0.75}Co_{0.20}Al_{0.05}(OH)_2$, $Ni_{0.92}Co_{0.05}Mn_{0.03}(OH)_2$, $Ni_{0.94}Co_{0.03}Mn_{0.03}(OH)_2$, $Ni_{0.88}Co_{0.06}Mn_{0.06}(OH)_2$, $Ni_{0.96}Co_{0.02}Mn_{0.02}(OH)_2$, $Ni_{0.93}Co_{0.04}Mn_{0.03}(OH)_2$, $Ni_{0.8}Co_{0.15}Mn_{0.05}(OH)_2$, $Ni_{0.75}Co_{0.20}Mn_{0.05}(OH)_2$, $Ni_{0.6}Co_{0.2}Mn_{0.2}(OH)_2$, $Ni_{0.7}Co_{0.15}Mn_{0.15}(OH)_2$, $Ni_{0.7}Co_{0.1}Mn_{0.2}(OH)_2$, $Ni_{0.8}Co_{0.1}Mn_{0.1}(OH)_2$, or $Ni_{0.85}Co_{0.1}Al_{0.05}(OH)_2$.

The nickel-based lithium metal oxide according to an embodiment may be, for example, $LiNi_{0.92}Co_{0.06}Mn_{0.02}O_2$, $Li_{1.05}Ni_{0.92}Co_{0.05}Al_{0.03}O_2$, $Li_{1.05}Ni_{0.94}Co_{0.03}Al_{0.03}O_2$, $Li_{1.05}Ni_{0.88}Co_{0.06}Al_{0.06}O_2$, $Li_{1.05}Ni_{0.96}Co_{0.02}Al_{0.02}O_2$, $Li_{1.05}Ni_{0.93}Co_{0.04}Al_{0.03}O_2$, $Li_{1.05}Ni_{0.8}Co_{0.15}Al_{0.05}O_2$, $Li_{1.05}Ni_{0.75}Co_{0.20}Al_{0.05}O_2$, $Li_{1.05}Ni_{0.92}Co_{0.05}Mn_{0.03}O_2$,

$Li_{1.05}Ni_{0.94}Co_{0.03}Mn_{0.03}O_2$, $Li_{1.05}Ni_{0.88}CO_{0.06}Mn_{0.06}O_2$, $Li_{1.05}Ni_{0.96}CO_{0.02}Mn_{0.02}O_2$, $Li_{1.05}Ni_{0.93}C0_{0.04}Mn_{0.03}O_2$, $Li_{1.05}Ni_{0.8}CO_{0.15}Mn_{0.05}O_2$, $Li_{1.05}Ni_{0.75}CO_{0.20}Mn_{0.05}O_2$, $Li_{1.05}Ni_{0.6}Co_{0.2}Mn_{0.2}0_2$, $Li_{1.05}Ni_{0.7}Co_{0.15}Mn_{0.15}O_2$, $Li_{1.05}Ni_{0.7}Co_{0.1}Mn_{0.2}O_2$, $Li_{1.05}Ni_{0.8}Co_{0.1}Mn_{0.1}O_2$, or $Li_{1.05}Ni_{0.85}Co_{0.1}Al_{0.05}O_2$.

According to another embodiment, there is provided a cathode for lithium secondary battery including a cathode current collector, the above-described cathode active material, and at least one selected from large particles or crystal particles having the same composition as the cathode active material and aggregates thereof.

The cathode according to an embodiment may include, for example, the above-described cathode active material and large particles or crystal particles having the same composition as the cathode active material.

As used herein, the "large particle" refers to a monolithic structure in which particles are not aggregated with each other as a morphology phase and exist as an independent phase, and may be a particle that exists alone without having a grain boundary therein and is composed of one particle. The large particle may be a single crystal or a polycrystalline particle including several crystals. The large particle may be a monolithic particle. The large particles may represent a product obtained by partially crushing or breaking the nickel-based lithium metal oxide secondary particle during cathode pressing, not the nickel-based lithium metal oxide secondary particle, which is a starting material used when forming the cathode active material layer.

The cathode active material of the cathode according to an embodiment may contain pores having a size of about 0.5 $\mu$m to about 4 $\mu$m or about 0.5 $\mu$m to about 2 $\mu$m. The size of the pores may be confirmed through SEM analysis.

After the cathode is pressed, the cathode active material is disintegrated, and thus the aggregated primary particles are dispersed to manufacture a crystal cathode plate. The pores are, for example, closed pores. The density of the electrode after pressing may be 3.3 g/cc or more.

The cathode includes a cathode active material layer having a structure in which particles are broken by being pressed more on the surface thereof than the central portion thereof adjacent to the cathode current collector. For example, a greater amount of large particles may be included in a surface portion of the cathode than in a central portion of the cathode, the central portion being adjacent to the cathode current collector. The reason why the cathode active material layer has the above-described structure is because the cathode active material layer is pressed more on the surface thereof than the central portion thereof adjacent to the cathode current collector. The structure of the cathode active material layer may be evaluated based on the area of an image through SEM or the like.

The size of the cathode active material at the central portion may be about 1 $\mu$m to about 7 $\mu$m, and the size of the cathode active material at the surface portion may be about 1 $\mu$m to about 5 $\mu$m.

The cathode may include a cathode active material layer having a structure in which the central portion thereof adjacent to the cathode current collector further includes a hollow cathode active material having a hollow structure as compared with the surface portion thereof. For example, a larger amount of a cathode active material having a hollow structure may be included in a central portion of the cathode than in a surface portion of the cathode, the central portion being adjacent to the cathode current collector. The structure of the cathode active material layer may be evaluated based on the area of an image through SEM or the like. The size of the pores of the cathode active material in the cathode after pressing may be different from the size of the pores of the cathode active material in the cathode before pressing.

The cathode according to an embodiment may include, for example, a cathode active material layer within two layers. The structure of the cathode active material layer may be confirmed through SEM, TEM, or the like.

As used herein, the "surface portion" indicates a region of the cathode active material layer far from the cathode current collector (substrate), and refers to a region of 30% by length to 50% by length, for example 40% by length, from the outermost surface of the cathode active material layer or a region within 20 $\mu$m from the outermost surface of the cathode active material layer (based on: when the total thickness of the cathode active material layer is 40 $\mu$m).

The "central portion" indicates a region of the cathode active material layer adjacent to the cathode current collector (substrate), and refers to a region of 50% by length to 70% by length, for example, 60% by length from the center of the total length from the cathode current collector to the outermost surface of the cathode active material layer, or refers to a remaining region excluding the region within 20 $\mu$m (based on the total thickness (40 $\mu$m) of the cathode active material layer) from the outermost surface of the nickel-based active material layer.

The cathode according to an embodiment may be manufactured without performing a pulverization process of the cathode active material, so that productivity may be improved.

A lithium secondary battery according to another embodiment includes the above-described cathode, an anode, and an electrolyte between the cathode and the anode.

When the method of preparing a cathode active material according to an embodiment is used, it is possible to suppress aggregation between particles and improve productivity, as well as to manufacture a large particle or crystal cathode active material without a pulverization process. In addition, when the cathode active material is used, it is possible to manufacture a lithium secondary battery having high density and improved lifespan.

Hereinafter, a method of manufacturing a lithium secondary battery, the battery including a cathode containing the cathode active material according to an embodiment, an anode, a lithium salt-containing non-aqueous electrolyte, and a separator, will be described.

The cathode and the anode are prepared by forming a cathode active material layer and an anode active material layer by applying and drying a composition for forming a cathode active material layer and a composition for forming an anode active material layer on current collectors, respectively.

The composition for forming a cathode active material layer may be prepared by mixing a cathode active material, a conductive material, a binder, and a solvent. As the cathode active material, the nickel-based active material according to an embodiment is used.

The cathode binder serves to improve adhesion between cathode active material particles and adhesion force between the cathode active material and the cathode current collector. Specific examples of the cathode binder may include polyvinylidene fluoride (PVDF), vinylidene fluoride, hexafluoropropylene copolymer (PVDF-co-HFP), polyvinyl alcohol, polyacrylonitrile, carboxymethylcellulose (CMC), starch, hydroxypropylcellulose, recycled cellulose, polyvinylpyrrolidone, tetrafluoroethylene, polyethylene, polypropylene, ethylene-propylene-diene terpolymer (EPDM), sulfonated EPDM, styrene-butadiene rubber, fluorine rubber, and various copolymers thereof. These binders may be used alone, and may be used as a mixture of two or more thereof.

The conductive material is not particularly limited as long as it has conductivity without causing chemical changes to the battery, and examples thereof may include graphite such as natural graphite or artificial graphite; carbon-based materials such as carbon black, acetylene black, ketjen black, channel black, furnace black, lamp black, and thermal black; conductive fibers such as carbon fibers and metal fibers; carbon fluoride; metal powders such as aluminium powder and nickel powder; conductive whiskers such as zinc oxide and potassium titanate; conductive metal oxides such as titanium oxide; and conductive materials such as polyphenylene derivatives.

The content of the conductive material may be 1 part by weight to 10 parts by weight or 1 part by weight to 5 parts by weight based on 100 parts by weight of the total weight of the cathode active material. When the content of the conductive material is within the above range, the finally obtained electrode has excellent conductivity properties.

A non-limiting example of the solvent may include N-methylpyrrolidone, and the content of the solvent may be 20 parts by weight to 200 parts by weight based on 100 parts by weight of the cathode active material. When the content of the solvent is within the above range, the operation for forming an active material layer is easy.

The cathode current collector may have a thickness of about 3 $\mu$m to about 500 $\mu$m, and is not particularly limited as long as it has high conductivity without causing chemical changes in the battery, and non-limiting examples thereof may include current collectors in which stainless steel, aluminium, nickel, titanium, heat-treated carbon, aluminium or stainless steel is surface-treated with carbon, nickel, titanium, or silver. The current collector may increase the adhesion force of the cathode active material by forming fine irregularities on its surface, and various forms such as films, sheets, foils, nets, porous bodies, foams, and nonwoven fabrics are possible.

Separately, an anode active material, a binder, and a solvent may be mixed to prepare a composition for forming an anode active material layer.

As the anode active material, a material capable of reversibly intercalating/ deintercalating lithium ions, a lithium metal, an alloy of a lithium metal, a material capable of doping and dedoping lithium, transition metal oxide, or a combination thereof may be used.

Examples of the material capable of reversibly intercalating/ deintercalating lithium ions may include carbon materials, that is, carbon-based anode active materials generally used in lithium secondary batteries. Examples of the carbon-based anode active material may include crystalline carbon, amorphous carbon, and a combination thereof. Examples of the crystalline carbon may include graphite such as shapeless, plate-like, flake-like, spherical or fibrous natural graphite or artificial graphite, and examples of the amorphous carbon include soft carbon or hard carbon, mesophase pitch carbide, and calcined coke.

As an alloy of the lithium metal, an alloy of lithium and a metal selected from Na, K, Rb, Cs, Fr, Be, Mg, Ca, Sr, Si, Sb, Pb, In, Zn, Ba, Ra, Ge, Al and Sn may be used.

Examples of the material capable of doping and dedoping lithium may include silicon-based materials such as Si, SiOx (0 < x < 2), and Si-Q alloys (Q is an element selected from alkali metals, alkaline earth metals, Group 13 elements, Group 14 elements, Group 15 elements, Group 16 elements, metals, rare earth elements, and combinations thereof, not Si), Si-C composites, Sn, $SnO_2$, Sn-R (R is an element selected from alkali metals, alkaline earth metals, Group 13 elements, Group 14 elements, Group 15 elements, Group 16 elements, metals, rare earth elements, and combinations thereof, not Sn), and Sn-C composites. In addition, a mixture of $SiO_2$ and at least one of the above materials may be used. Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof.

Lithium titanium oxide may be used as the transition metal oxide.

Non-limiting examples of the anode binder may include various types of binder polymers such as polyvinylidene fluoride (PVDF), vinylidene fluoride, hexafluoropropylene copolymer (PVDF-co-HFP), polyvinyl alcohol, polyacrylonitrile, carboxymethylcellulose (CMC), starch, hydroxypropylcellulose, recycled cellulose, polyvinylpyrrolidone, tetrafluoroethylene, polyethylene, polypropylene, ethylene-propylene-diene terpolymer (EPDM), sulfonated EPDM, styrene-butadiene rubber, fluorine rubber, polyacrylic acid and polymers in which hydrogen of polyacrylic acid is substituted with Li, Na, or Ca, and various copolymers thereof.

The anode active material layer may further include a thickener.

As the thickener, at least one of carboxymethyl cellulose (CMC), carboxyethyl cellulose, starch, regenerated cellulose, ethyl cellulose, hydroxymethyl cellulose, hydroxyethyl cellulose, hydroxypropyl cellulose, and polyvinyl alcohol may be used, and for example, CMC may be used.

The content of the solvent may be about 100 parts by weight to about 300 parts by weight based on 100 parts by weight of the anode active material. When the content of the solvent is within the above range, the operation for forming the anode active material layer is easy.

The anode active material layer does not need a conductive material when conductivity is ensured. The anode active material layer may further include a conductive material if necessary. The conductive material is not particularly limited as long as it has conductivity without causing chemical changes to the battery, and examples thereof may include graphite such as natural graphite or artificial graphite; carbon-based materials such as carbon black, acetylene black, ketjen black, channel black, furnace black, lamp black, and thermal black; conductive fibers such as carbon fibers and metal fibers; carbon fluoride; metal powders such as aluminium powder and nickel powder; conductive whiskers such as zinc oxide and potassium titanate; conductive metal oxides such as titanium oxide; and conductive materials such as polyphenylene derivatives. The conductive material may be preferably carbon black, and more specifically, carbon black having an average particle diameter of several tens of nanometers.

When the anode active material layer contains the conductive material, the content of the conductive material is 0.01 parts by weight to 10 parts by weight, 0.01 parts by weight to 5 parts by weight, or 0.1 parts by weight to 2 parts by weight based on 100 parts by weight of the total weight of the anode active material layer.

The anode current collector may generally be made to have a thickness of about 3 $\mu$m to about 500 $\mu$m. The anode current collector is not particularly limited as long as it has high conductivity without causing chemical changes in the battery, and non-limiting examples thereof may include current collectors in which stainless steel, aluminium, nickel, titanium, heat-treated carbon, aluminium or stainless steel is surface-treated with carbon, nickel, titanium, or silver. and a current collector made of an aluminium-cadmium alloy. Like the cathode current collector, the anode current collector may increase the adhesion force of the anode active material by forming fine irregularities on its surface, and various forms such as films, sheets, foils, nets, porous bodies, foams, and nonwoven fabrics are possible.

A separator is interposed between the cathode and anode prepared according to the above processes.

The separator may have a pore diameter of about 0.01 $\mu$m to about 10 $\mu$m and a thickness of about 5 $\mu$m to about 300 $\mu$m. Specifically, as the separator, an olefin-based polymer such as polypropylene or polyethylene; or a sheet or nonwoven fabric made of glass fiber may be used. When a solid electrolyte such as a polymer is used as the electrolyte, the solid electrolyte may also serve as the separator.

The lithium salt-containing non-aqueous electrolyte includes a non-aqueous electrolyte and a lithium salt. As the non-aqueous electrolyte, a non-aqueous electrolyte solution, an organic solid electrolyte, an inorganic solid electrolyte, or the like is used.

Non-limiting examples of the non-aqueous electrolyte may include aprotic organic solvents such as N-methyl-2-pyrrolidinone, propylene carbonate, ethylene carbonate, butylene carbonate, dimethyl carbonate, diethyl carbonate, gamma-butyrolactone, 1,2-dimethoxyethane, 2-methyl tetrahydrofuran, dimethyl sulfoxide, 1,3-dioxolane, N,N-formamide, N,N-dimethylformamide, dioxolane, acetonitrile, nitro methane, methyl formate, methyl acetate, phosphoric acid triesters, trimethoxy methane, dioxolane derivatives, sulfolane, methyl sulfolane, 1,3-dimethyl-2-imidazolidinone, propylene carbonate derivatives, tetrahydrofuran derivatives, ethers, methyl pyropionate,and ethyl propionate.

Non-limiting examples of the organic solid electrolyte may include polyethylene derivatives, polyethylene oxide derivatives, polypropylene oxide derivatives, phosphoric ester polymer, polyester sulfide, polyvinyl alcohol, and polyvinylidene fluoride.

Non-limiting examples of the inorganic solid electrolyte may include nitrides, halogenides and sulfates of lithium (Li) such as $Li_3N$, LiI, $Li_5NI_2$, $Li_3N$-LiI-LiOH, $LiSiO_4$, $Li_2SiS_3$, $Li_4SiO_4$, $Li_4SiO_4$-LiI-LiOH, and $Li_3PO_4$-$Li_2S$-$SiS_2$.

Non-limiting examples of the lithium salt, as materials easily soluble in the non-aqueous electrolyte, may include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, $(FSO_2)_2NLi$, lithium chloroborate, and combinations thereof.

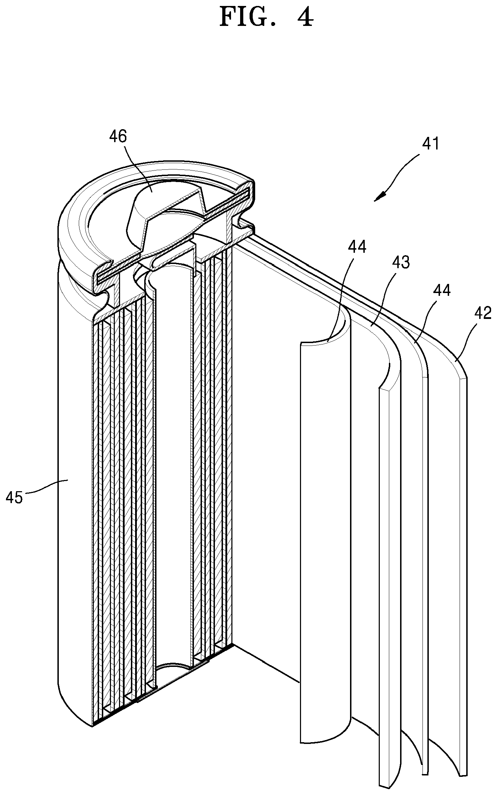

FIG. 4 is a schematic perspective view illustrating the structure of a lithium secondary battery according to an embodiment.

Referring to FIG. 4, a lithium secondary battery 41 includes a cathode 43 according to an embodiment, an anode 42, and a separator 44. An electrode assembly in which the cathode 43, the anode 42, and the separator 44 are wound or folded is accommodated in a battery case 45. The separator 44 may be disposed between the cathode 43 and the anode 42 to form each cell structure, and these cell structures are stacked. Subsequently, an organic electrolyte is injected into the battery case 45, and the battery case is sealed with a cap assembly 46 to complete the lithium secondary battery 41. The battery case 45 may be a cylindrical case, a rectangular case, a thin film case, or the like. For example, the lithium secondary battery 41 may be a large thin film battery. The lithium secondary battery may be a lithium-ion battery. After the cell structure is accommodated in a pouch, this cell structure is impregnated with an organic electrolyte, and sealed to complete a lithium-ion polymer battery. In addition, the plurality of cell structures are stacked to form a battery pack, and this battery pack may be used in all appliances requiring high capacity and high output. For example, this battery pack may be used in notebooks, smart phones, electric vehicles, and the like.

In addition, since the lithium secondary battery has excellent storage stability, lifetime characteristics, and high-rate characteristics at high temperatures, it may be used in electric vehicles (EV). For example, the lithium secondary battery may be used in hybrid vehicles such as plug-in hybrid electric vehicles (PHEV).

The present disclosure will be described in more detail with reference to the following Examples and Comparative Examples. However, these Examples are set forth to illustrate the present disclosure, and the scope of the present disclosure is not limited thereto.

(Preparation of nickel-based metal precursor)

Preparation Example 1

A nickel-based metal precursor ($Ni_{0.92}CO_{0.06}Mn_{0.02}(OH)_2$) was synthesized through co-precipitation.

Nickel sulfate ($NiSO_4 \cdot 6H_2O$), cobalt sulfate ($CoSO_4 \cdot 7H_2O$), and manganese sulfate ($MnSO_4 \cdot H_2O$) were dissolved in distilled water as a solvent in a molar ratio of Ni:Co:Mn=92:6:2 to prepare a metal raw material mixed solution. In order to produce a complex compound, a dilute aqueous ammonia ($NH_4OH$) solution and sodium hydroxide (NaOH) were prepared. Thereafter, the metal raw material mixed solution, aqueous ammonia, and sodium hydroxide were put into a reactor to obtain a mixture. Sodium hydroxide was added to maintain the pH in the reactor.

After the pH of the mixture was adjusted to a pH of 11.7 and the mixture was stirred for 10 hours, the pH of the mixture was adjusted to 11.5 to decrease the pH by about 0.2 based on initial pH, so that a co-precipitation rate was changed to cause a difference in synthesis rate between the inside and outside of the nickel-based metal precursor, thereby obtaining a nickel-based metal precursor having pores therein.

After the reaction was carried out for about 20 hours while stirring the reaction mixture, the addition of the metal raw material mixed solution was stopped.

The slurry solution in the reactor was filtered, washed with high-purity distilled water, and then dried in a hot air oven at 200°C for 24 hours to obtain a hollow-structure nickel-based metal precursor ($Ni_{0.92}Co_{0.06}Mn_{0.02}(OH)_2$) having pores therein. The nickel-based metal precursor is secondary particles each being aggregates of primary particles, and the average particle diameter of the secondary particles is about 14 $\mu$m.

Comparative Preparation Example 1

A nickel-based metal precursor ($Ni_{0.92}Co_{0.06}Mn_{0.02}(OH)_2$ not having a hollow structure was obtained in the same manner as in Preparation Example 1, except that the pH of the mixture was maintained at 11.7 without change instead of adjusting the pH of the mixture to 11.7 and stirring the mixture for 10 hours and then adjusting the pH of the mixture to 11.5 to decrease the pH by about 0.2 based on the initial pH.

(Preparation of cathode active material for lithium secondary batteries)

Example 1

Lithium carbonate was added to the hollow-structure nickel-based metal precursor ($Ni_{0.92}Co_{0.06}Mn_{0.02}(OH)_2$)) of Preparation Example 1 to obtain a first mixture. The mixing molar ratio (Li/M) of lithium and metal in the first mixture is about 1.04. Here, the metal content is a total content of Ni, Co and Mn. The mixture was subjected to primary heat treatment at 900°C for 15 hours under an air atmosphere.

The primary heat treatment product was disintegrated using a roll crusher (interval: 0.1 mm), and then disintegrated through a colloidal mill (interval < 100 $\mu$m) to make a product having a particle size of about 13 $\mu$m to about 14 $\mu$m.

A cobalt precursor ($Co(OH)_2$) was added to the product disintegrated according to the above process, and secondary heat treatment was carried out at about 770°C under an oxygen atmosphere to prepare a cathode active material ($LiNi_{0.92}CO_{0.06}Mn_{0.02}O_2$) having a hollow structure and including a cobalt compound-containing coating layer. The content of the cobalt precursor was controlled such that the content of a cobalt compound in the cobalt compound-containing coating layer was 2 mol% based on the total content of the cathode active material.

The cathode active material obtained according to Example 1 had a state of secondary particles, each being an aggregate of primary particles. The size of the primary particles was about 3.5 $\mu$m, the average particle diameter of the secondary particles was about 13 $\mu$m, and each of the secondary particles had pores having a size of 3 $\mu$m therein. The content of the cobalt compound is 2 mol% based on the total content of the finally-obtained cathode active material, and the thickness of the coating layer is about 20 nm.

Comparative Example 1

Lithium carbonate was added to the hollow-structure nickel-based metal precursor ($Ni_{0.92}Co_{0.06}Mn_{0.02}(OH)_2$)) of Preparation Example 1 to obtain a first mixture. The mixing molar ratio (Li/M) of lithium and metal in the first mixture is about 1.04. Here, the metal content is a total content of Ni, Co and Mn. The mixture was subjected to primary heat treatment at 900°C for 15 hours under an air atmosphere.

The primary heat treatment product obtained according to the above process was pulverized using a Hosogawa jet mill (Blower 35Hz, AFG 8000rpm, Air 4 kgf/cm$^2$) to prepare a nickel-based lithium metal oxide having a non-hollow structure.

A cobalt precursor ($Co(OH)_2$) was added to the nickel-based lithium metal oxide having a non-hollow structure, and secondary heat treatment was carried out at about 770°C under an oxygen atmosphere to prepare a cathode active material (particle size: 3 $\mu$m to 4 $\mu$m) having a non-hollow structure.

Comparative Example 2

A nickel-based lithium metal oxide having a non-hollow structure and a cathode active material having a non-hollow structure were prepared in the same manner as in Comparative Example 1, except that the secondary heat treatment was not performed.

For the cathode active materials prepared according to Comparative Examples 1 and 2, a pulverization process using a jet mill is additionally performed as an essential process, and the nickel-based lithium metal oxide having a non-hollow structure obtained after pulverization showed a small-grained crystal form having a size of about 3 $\mu$m to about 4 $\mu$m. These small-grained crystals have poor flow characteristics of powder, so manufacturing processability in mass production is poor. In addition, the cathode active materials prepared according to Comparative Examples 1 and 2 had a form of pulverized primary particles, but had many surface defects and showed a shape in which particles were broken. The surface defects are caused by a pulverization process.

In contrast, since the cathode active material of Example 1 maintains a large-grain form, its specific surface area is small, and its flowability is excellent, so its mass production processability is improved, as compared with the case of using the cathode active materials of Comparative Examples 1 and 2.

Examples 2 to 7, Comparative Example 2-1, and Comparative Example 2-2

Cathode active materials were prepared in the same manner as in Example 1, except that preparation processes were changed according to the reaction conditions shown in Table 1 below so as to obtain the cathode active material as shown in Table 1 below.

[Table 1]

| Class. | Cathode active material | | | Reaction condition |
|---|---|---|---|---|
| | Primary particle size ($\mu$m) | Secondary particle size ($\mu$m) | Inner pore size ($\mu$m) | |
| Example 1 | 3.5 | 13 | 3 | Primary heat treatment: 900°C Secondary heat treatment: 770°C |
| Example 2 | 2 | 15 | 5 | Same as Example 1 except that primary heat treatment temperature was changed to 870°C |
| Example 3 | 6 | 15 | 5 | Same as Example 1 except that primary heat treatment temperature was changed to 930°C |
| Example 4 | 3.5 | 10 | 5 | Same as Example 1 except that size of nickel-based metal precursor was changed to 11 $\mu$m |
| Example 5 | 3.5 | 18 | 5 | Same as Example 1 except that size of nickel-based metal precursor was changed to 19 $\mu$m. |

(continued)

| Class. | Cathode active material | | | Reaction condition |
|---|---|---|---|---|
| | Primary particle size ($\mu$m) | Secondary particle size ($\mu$m) | Inner pore size ($\mu$m) | |
| Example 6 | 3.5 | 15 | 2 | Same as Example 1 except that inner pore size of nickel-based metal precursor is smaller than that of Example 1 |
| Example 7 | 3.5 | 15 | 7 | Same as Example 1 except that inner pore size of nickel-based metal precursor is larger than that of Example 1 |
| Comparative Example 2-1 | 0.5 | 3 | 0 | Same as Example 1 except that pulverization was performed at higher pressure than jet mill conditions of Comparative Example 1 |
| Comparative Example 2-2 | 5 | 5 | 0 | Same as Example 1 except that pulverization was performed at lower pressure than jet mill conditions of Comparative Example 1 |

Comparative Example 3

A nickel-based lithium metal oxide including crystal particles and having a hollow structure and a cathode active material were prepared in the same manner as in Example 1, except that primary heat treatment was performed at 770°C and secondary heat treatment was performed at 900°C.

When a cathode active material was prepared according to Comparative Example 3, secondary heat treatment was performed at a higher temperature than that of primary heat treatment. As a result, in the obtained cathode active material, crystals grew less and cation mixing characteristics were poor, compared to the cathode active material of Example 1. When a cathode active material was prepared according to Comparative Example 3, since secondary heat treatment is performed at 900°C, it was not easy for Ni to form a layered structure, so a large amount of Ni was phase-transitioned to a spinel or cubic phase, and cobalt added in the form of cobalt hydroxide was not applied on the surface but diffused into particles. As a result, the cathode active material of Comparative Example 3 had very different crystal properties compared to the cathode active material of Example 1.

Comparative Example 4 (pore-free nickel-based metal precursor was used as starting material)

A cathode active material was prepared in the same manner as in Example 1, except that the nickel-based metal precursor ($Ni_{0.92}CO_{0.06}Mn_{0.02}(OH)_2$) having no hollow structure obtained according to Comparative Preparation Example 1 was used instead of the nickel-based metal precursor having a hollow structure of Preparation Example 1.

When primary heat treatment was performed according to Comparative Example 4, as compared with Example 1, a cathode active material having no hollow structure therein and having dense primary particles was prepared.

Examples 8 and 9

Cathode active materials were prepared in the same manner as in Example 1, except that the contents of the cobalt precursor were controlled such that the contents of a cobalt compound in the cobalt compound-containing coating layer were 0.1 mol% and 5.0 mol%, respectively, based on the total content of the cathode active material.

Manufacture Example 1: Manufacture of coin cell

A coin cell was manufactured as follows using the cathode active material ($LiNi_{0.92}Co_{0.06}Mn_{0.02}O_2$) obtained according to Example 1 without a separate pulverization process.

A mixture of 96 g of the cathode active material ($LiNi_{0.92}Co_{0.06}Mn_{0.02}O_2$) obtained according to Example 1, 2g of polyvinylidene fluoride, 47 g of N-methylpyrrolidone as a solvent, and 2 g of carbon black as a conducting agent was defoamed using a mixer to prepare a uniformly dispersed slurry for forming a cathode active material.

The slurry prepared in this way was applied onto an aluminium foil using a doctor blade to make a thin plate, and then this thin plate was dried at 135°C for 3 hours or more and subjected to pressing and vacuum drying to manufacture a cathode.

A 2032 type coin cell was manufactured using the cathode and a lithium metal electrode as a counter electrode. A separator (thickness: about 16 $\mu$m) made of a porous polyethylene (PE) film was interposed between the cathode and the lithium metal electrode, and an electrolyte was injected to prepare a 2032 type coin cell. As the electrolyte, a solution containing 1.1M $LiPF_6$ dissolved in a solvent in which ethylene carbonate (EC) and ethylmethyl carbonate (EMC) were mixed in a volume ratio of 3:5 was used.

When a coin cell is manufactured according to Manufacture Example 1, it is not necessary to undergo a pulverization process when manufacturing a cathode, and primary particles aggregated in the pressing process may be dispersed. Accordingly, productivity may be improved.

Manufacture Examples 2 to 9: Manufacture of coin cells

Coin cells were manufactured in the same manner as in Manufacture Example 1, except that each of the cathode active materials of Examples 2 to 9 was used instead of the cathode active material of Example 1.

Comparative Manufacture Example 1: Manufacture of coin cell

A coin cell was manufactured in the same manner as in Manufacture Example 1, except that the cathode active material ($LiNi_{0.92}Co_{0.06}Mn_{0.02}O_2$) obtained according to Comparative Example 1 was used as a cathode active material.

Comparative Manufacture Example 2

A coin cell was manufactured in the same manner as in Comparative Manufacture Example 1, except that the cathode active material of Comparative Example 2 was used instead of the cathode active material of Comparative Example 1.

Comparative Manufacture Example 3

A coin cell was manufactured in the same manner as in Comparative Manufacture Example 1, except that the cathode active material of Comparative Example 3 was used instead of the cathode active material of Comparative Example 1.

Comparative Manufacture Example 4

A coin cell was manufactured in the same manner as in Comparative Manufacture Example 1, except that the cathode active material of Comparative Example 4 was used instead of the cathode active material of Comparative Example 1.

Evaluation Example 1: Scanning Electron Microscope

(1) Example 1, Comparative Example 2 and Comparative Example 4

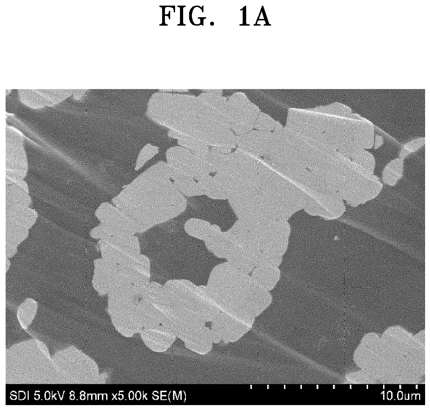

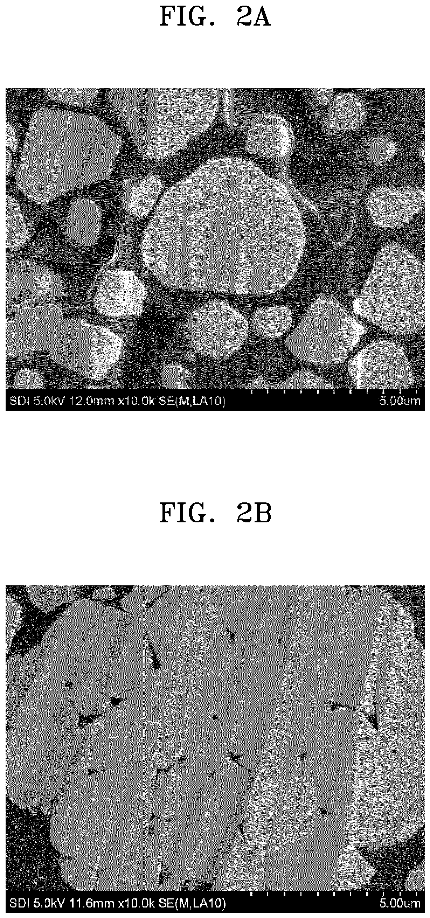

The cathode active materials of Example 1, Comparative Example 2, and Comparative Example 4 were subjected to scanning electron microscope analysis. Magellan 400L (FEI company) was used as a scanning electron microscope, and analysis results are shown in FIG. 1A and FIGS. 2A and 2B.

FIG. 1A is a SEM photograph of a cross-section of the cathode active material of Example 1, FIG. 2A is a SEM photograph of a cross-section of the cathode active material of Comparative Example 2, and FIG. 2B is a SEM photograph of a cross-section of the cathode active material of Comparative Example 4.

Referring to FIG. 1, the cathode active material of Example 1 has a large particle form, has a hollow structure having pores therein, and includes primary particles having a size of 3.5 $\mu$m and secondary particles having a size of 13 $\mu$m.

As shown in FIG. 2A, the cathode active material of Comparative Example 2 has a shape of small grains (1 $\mu$m to 5 $\mu$m) and no pores. The cathode active material of Example 1 is an aggregate (secondary particles) before the small particles (primary particles) of Comparative Example 2 are pulverized.

In contrast, although the cathode active material of Comparative Example 4 was crystal form as shown in FIG. 2B, it has a dense aggregate form without a hollow structure.

(2) Preparation Example 1 and Comparative Preparation Example 1

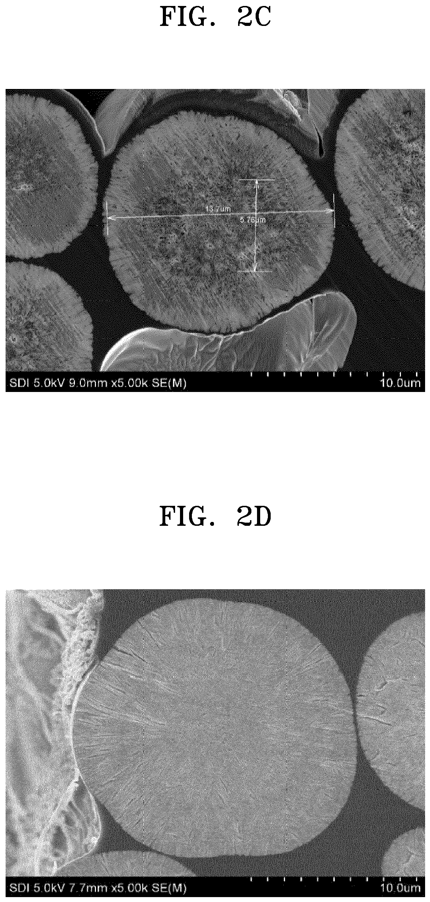

The nickel-based metal precursors of Preparation Example 1 and Comparative Preparation Example 1 were was subjected to scanning electron microscope analysis, and analysis results thereof are shown in FIGS. 2C and 2D.

Referring to FIGS. 2C and 2D, the nickel-based metal precursor of Preparation Example 1 has pores therein and includes secondary particles having a size of 13.7 um (about 14 $\mu$m). The inside where pores exist has a major axis length of about 5.76 $\mu$m, and shows an amorphous structure.

In contrast, as shown in FIG. 2D, the nickel-based metal precursor of Comparative Preparation Example 1 shows a structure having no pores therein, unlike the nickel-based metal precursor of Preparation Example 1.

Evaluation Example 2

The D50s, BET specific surface areas, and repose angles of the cathode active materials of Example 1, Comparative Example 1 and Comparative Example 2 were measured and shown in Table 2 below.

In the repose angle, a method of measuring an angle at which powder is piled up is used. The repose angle was measured using a PT-D type powder tester (manufactured by Hosokawa Micron Corporation). Specifically, a funnel equipped with a nozzle having an inner diameter of 5 mm was provided using a support such that the upper portion of the funnel is located at a position of 225 mm from a horizontal board and the lower portion of the nozzle is located at a position of 135 mm from the horizontal board. A powder collecting table was located at a position of 75 mm from the lower portion of the nozzle. While taking care not to vibrate, the cathode active material was injected into the funnel so that it does not volatilize, and the angle of a corner formed by a horizontal plane of an inclined plane of a conical powder layer formed on the powder collecting table was measured. The same experiment was repeated 3 times, and the average value of the measured angles is set as a repose angle.

[Table 2]

| Class. | D50($\mu$m) | BET specific surface area (m$^2$/g) | Repose angle (°) |
|---|---|---|---|
| Example 1 | 13.8 | 0.203 | 27.5 |
| Comparative Example 1 | 3.3 | 0.675 | 43.2 |
| Comparative Example 2 | 2.8 | 0.858 | 49.4 |

As shown in Table 2, it may be found that compared to the cathode active materials of Comparative Examples 1 and 2, the cathode active material of Example 1 has a large D50, a small BET specific surface area, and a small repose angle, indicating that flowability is better.

Evaluation Example 3: Analysis of State after pressing during Manufacturing Cathode

In order to compare the particle sizes and pore presences after pressing in the cathodes of Manufacture Example 1 and Comparative Manufacture Example 4, scanning electron microscope analysis was performed.

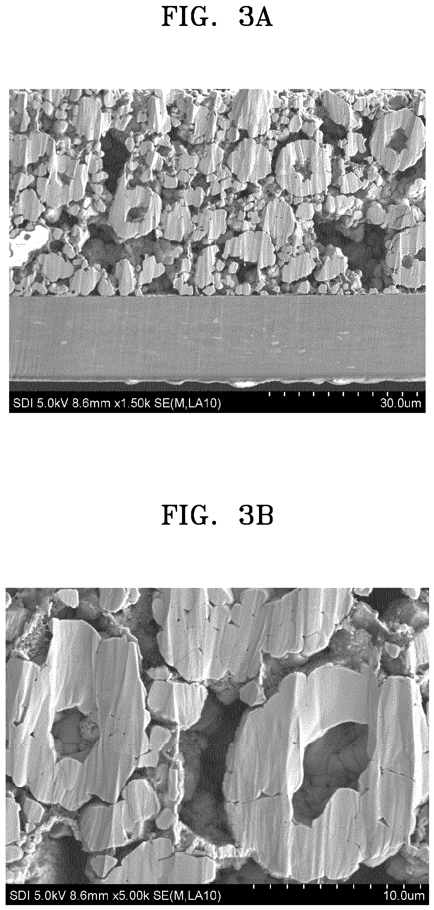

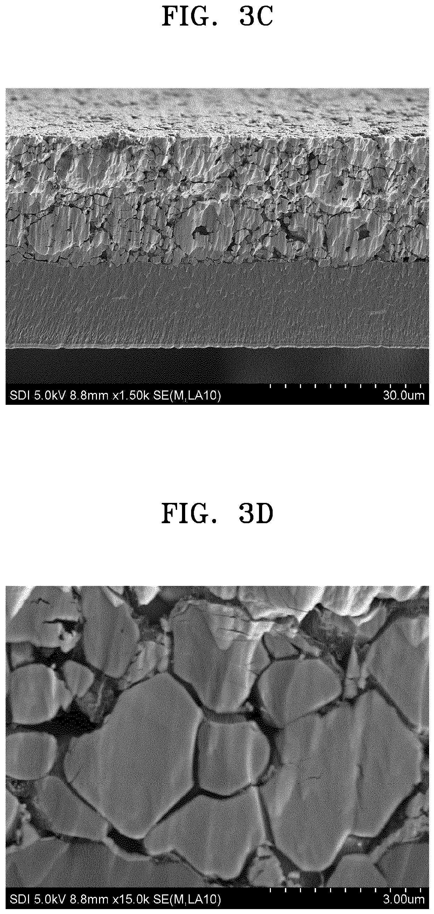

The scanning electron microscope analysis results are shown in FIGS. 3A to 3D. FIGS. 3A and 3B show the states before pressing when manufacturing the cathode of Manufacture Example 1. FIG. 3C shows a state after pressing during the process of manufacturing the cathode according to Manufacture Example 1, and FIG. 3D shows a state after pressing during the process of manufacturing the cathode according to Comparative Manufacture Example 4.

In the cathode of Manufacture Example 1, the cathode active material having pores is disintegrated and dispersed by pressing. As a result, as shown in FIG. 3C, the cathode active material layer has a two-layer structure and includes nickel-based metal oxide secondary particles each including a plurality of large primary particles as a cathode active material.

The cathode of Manufacture Example 1 includes a mixture of primary particles A and secondary particles B, which are aggregates of primary particles. It may be confirmed that pores exist in the cathode active material layer. The primary particles A are a plurality of large primary particles, and the secondary particle B shows a state in which the nickel-based lithium metal oxide secondary particle was partially crushed or broken by the pressing of the cathode.

In addition, it may be found that, in the cathode active material layer, particles are broken by being pressed more at the surface portion thereof than the central portion thereof adjacent to the cathode current collector.

In the cathode manufactured according to Comparative Manufacture Example 4, the cathode active material of Comparative Example 4 having no hollow structure is used. As shown in FIG. 3D, in the cathode of Comparative Manufacture Example 4, unlike the cathode of Manufacture Example 1, the separation of secondary particles did not occur after pressing during the process of manufacturing a cathode, thereby indicating a state of the cathode very different from that of the cathode of Manufacture Example 1 (refer to FIG. 3C). When the cathode of Comparative Manufacture Example 4 was used, electrochemical characteristics were poor compared to the case of Manufacture Example 1.

Evaluation Example 4: X-ray diffraction analysis

The cathode active material prepared according to Example 1 and the cathode active materials prepared according to Comparative Examples 1 to 3 were subjected to X-ray diffraction analysis using X'pert pro (PANalytical) using Cu K$\alpha$ radiation (1.54056 Å), and the results are shown in Table 3 below.

In Table 3 below, $I_{(003)}$ refers to an intensity of the peak corresponding to the (003) plane (peak having $2\theta$ of about 18° to about 19°), and $I_{(104)}$ refers to an intensity of the peak corresponding to the (104) plane (peak having $2\theta$ of about 44.5°). In addition, $FWHM_{(003)}$ refers to full width at half maximum (FWHM) of the peak corresponding to the (003) plane, and $FWHM_{(104)}$ refers to full width at half maximum (FWHM) of the peak corresponding to the (104) plane. In Table 3 below, $A_{(003)}$ refers to an area of the peak corresponding to the (003) plane, and $A_{(104)}$ refers to an area of the peak corresponding to the (104) plane

[Table 3]

| Class. | $FWHM_{(003)}$(°) | $FWHM_{(003)}$/FWHM (104) | $I_{(003)}$/$I_{(104)}$ | $A_{(003)}$/$A_{(104)}$ |
|---|---|---|---|---|
| Example 1 | 0.0807 | 0.85 | 1.73 | 1.35 |
| Comparative Example 1 | 0.0818 | 0.73 | 1.66 | 1.21 |
| Comparative Example 2 | 0.0805 | 0.79 | 1.65 | 1.23 |
| Comparative Example 3 | 0.0850 | 0.63 | 1.31 | 1.12 |

It was found that the cathode active material of Example 1 is a crystal from the $FWHM_{(003)}$ and $FWHM_{(003)}$/$FWHM_{(104)}$ characteristics of Table 3. In addition, it was found that the cathode active material of Example 1 did not undergo a pulverization process, so that it had less crystal damage to the cathode active material, and thus had superior crystal characteristics compared to Comparative Examples 1 to 3. The less crystal damage of the cathode active material may be confirmed from the above-described $FWHM_{(003)}$ and $FWHM_{(003)}$/$FWHM_{(104)}$ values. It means that the lower the FWHM (003), the larger the crystal grains of the active material was grown in the (003) direction with a uniform crystal structure, and it means that the higher the $FWHM_{(003)}$/$FWHM_{(104)}$ ratio, the crystal grains of the active material was grown in the (104) direction with a uniform crystal structure.

As may be found from Table 3, the cathode active material of Example 1 exhibited a level similar to the crystal characteristics of Comparative Example 2. When this cathode active material of Example 1 was used, the mixing ratio of cations was reduced compared to the case of using the cathode active materials of Comparative Examples 1 and 2, and thus high capacity was possible.

Evaluation Example 5: Charge-Discharge Characteristics

In the coin cells manufactured according to Manufacture Example 1, Comparative Manufacture Example 1, Comparative Manufacture Example 2, and Comparative Manufacture Example 4, charge-discharge characteristics and the like were evaluated with a charger (manufacturer: TOYO, model: TOYO-3100).

In the first charge-discharge cycle, the coin cell was charged with a constant current of 0.1 C at 25 °C until a voltage reached 4.2 V, and was then charged with a constant voltage until the current reached 0.05 C. After the completely charged coin cell was subjected to a rest period of about 10 minutes, the coin cell was discharged with a constant current of 0.1 C until the voltage reached 3 V. In the second charge-discharge, the coin cell was charged with a constant current of 0.2 C until a voltage reached 4.2 V, and was then charged with a constant voltage until the current reached 0.05 C. After the completely charged coin cell was subjected to a rest period of about 10 minutes, the coin cell was discharged with a constant current of 0.2 C until the voltage reached 3 V.

For lifespan evaluation, the coin cell was charged with a constant current of 1 C until a voltage reached 4.2 V, and was then charged with a constant voltage until the current reached 0.05 C. After the completely charged coin cell was subjected to a rest period of about 10 minutes, the coin cell was discharged with a constant current of 0.2 C until the voltage reached 3 V. This cycle was repeated 50 times and evaluation was performed.

Capacity retention ratio (CRR) was calculated from Equation 2 below, and charge-discharge efficiency was calculated from Equation 3 below.

[Equation 2]

Capacity retention ratio [%] = [discharge capacity at 50th cycle / discharge capacity at 1st cycle] X 100

[Equation 3]

Charge-discharge efficiency [%]= [discharge voltage at 1st cycle / charge voltage at 1st cycle] X 100

The above-described capacity retention ratio, and charge-discharge efficiencywere evaluated and shown in Table 4 below.

[Table 4]

| Class. | Charge-discharge efficiency (%) | Capacity retention ratio (%) |
|---|---|---|
| Manufacture Example 1 | 88 | 94 |
| Comparative Manufacture Example 1 | 89 | 95 |
| Comparative Manufacture Example 2 | 89 | 94 |
| Comparative Manufacture Example 4 | 87 | 89 |

Referring to Table 4, the coin cell manufactured according to Manufacture Example 1 has improved capacity retention and charge-discharge efficiency as compared to the coin cell of Comparative Manufacture Example 4 that has on pores and was not pulverized. In addition, as shown in Table 4, the coin cell of Manufacture Example 1 has almost the same charge-discharge efficiency and capacity retention ratio as compared to the coin cell of Comparative Manufacture Examples 1 and 2, but as shown in Table 2 above, the processibility (flowability) of particles is greatly improved compared to the coin cell of Comparative Manufacture Examples 1 and 2 in which pulverization is performed, so that mass production is easy.

Evaluation Example 6: Energy Dispersive Spectroscopy (EDS) analysis

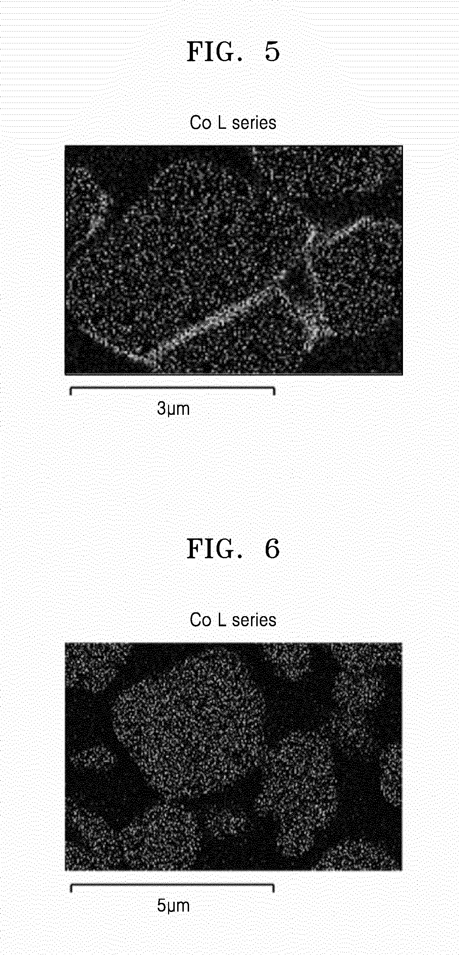

The concentration distributions of metal ions in the cathode active materials of Example 1 and Comparative Example 1 were measured by EDS, and the results are shown in FIGS. 5 and 6, respectively.
As shown in FIG. 5, it may be found that in the cathode active material of Example 1, cobalt is present in a higher concentration toward the surface thereof.
In contrast, as shown in FIG. 6, the cathode active material of Comparative Example 1 showed a uniform distribution of cobalt as a whole. In the case of Comparative Example 1, since the surfaces of particles having a size of 3 $\mu$m to 4 $\mu$m are coated with cobalt after pulverization, it is easy for cobalt to penetrate from the surface to the inside, so that cobalt exhibits a uniform distribution characteristic as a whole. In contrast, in the case of Example 1, since particles have a size of 13 $\mu$m, cobalt is present in a higher concentration toward the surface thereof compared to the Comparative Example 1.
When a cathode active material for lithium secondary batteries according to one or more embodiments is used, a pulverization process of the cathode active material may be omitted, aggregation between particles may be suppressed, productivity may be improved, and a cation mixing ratio may be reduced, so that a large particle nickel-based active material for lithium secondary batteries, capable of high capacity, may be manufactured. A lithium secondary battery manufactured using such a cathode active material for lithium secondary batteries has improved charge-discharge efficiency and capacity retention.
It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

**EP 4 151 602 A1**

**Claims**

1. A cathode active material for lithium secondary batteries, the cathode active material comprising:
nickel-based lithium metal oxide secondary particles each including a plurality of large primary particles, the secondary particles having a hollow structure having pores therein, the large primary particles having a size of about 2 $\mu$m to about 6 $\mu$m, and each of the secondary particles having a size of about 10 $\mu$m to about 18 $\mu$m; and a cobalt compound-containing coating layer arranged on surfaces of the nickel-based lithium metal oxide secondary particles.

2. The cathode active material of claim 1, wherein at least one of the surfaces and grain boundaries of the plurality of large primary particles includes the cobalt compound-containing coating layer.

3. The cathode active material of claim 1 or claim 2, wherein:

(i) a content of a cobalt compound in the cobalt compound-containing coating layer is about 0.1 mol% to about 5.0 mol% based on a total content of the cathode active material; and/or
(ii) the cobalt compound-containing coating layer has a thickness of about 1 nm to about 50 nm.

4. The cathode active material of any one of claims 1 to 3, wherein, in the cobalt compound-containing coating layer, a cobalt compound is cobalt oxide, lithium cobalt oxide, or a combination thereof, optionally wherein the cobalt compound-containing coating layer further includes at least one selected from boron, manganese, phosphorus, aluminium, zinc, zirconium, and titanium.

5. The cathode active material of any one of claims 1 to 4, wherein the pores in the cathode active material have a size of about 2 $\mu$m to about 7 $\mu$m.

6. The cathode active material of any one of claims 1 to 5, wherein:

(i) the nickel-based lithium metal oxide is a compound represented by Formula 1 below:

$$[\text{Formula 1}] \qquad Li_a(Ni_{1-x-y}M1_xM2_y)O_{2\pm\alpha1}$$

wherein in Formula 1, M1 is at least one element selected from Co, Mn, and Al,
M2 is at least one element selected from boron (B), magnesium (Mg), calcium (Ca), strontium (Sr), barium (Ba), titanium (Ti), vanadium (V), chromium (Cr), iron (Fe), copper (Cu)), and zirconium (Zr), and
$0.95\leq a\leq1.1$, $0.6\leq(1-x-y)<1$, $0\leq x<0.4$, $0\leq y<0.4$, and $0\leq\alpha1\leq0.1$ are satisfied, and a case where both x and y are 0 is excluded; or

(ii) the nickel-based lithium metal oxide is a compound represented by Formula 2 below:

$$[\text{Formula 2}] \qquad Li_a(Ni_{1-x-y-z}Co_xM3_yM_z)O_{2\pm\alpha1}$$

wherein, in Formula 2, M3 is at least one element selected from Mn and Al,
M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and
$0.95\leq a\leq1.1$, $0.6\leq(1-x-y-z)<1$, $0\leq x<0.4$, $0\leq y<0.4$, $0\leq z<0.4$, and $0\leq\alpha1\leq0.1$ are satisfied, and a case where all of x, y, and z are 0 is excluded.

7. The cathode active material of any one of claims 1 to 6, wherein:

(i) the primary particles have a size of about 2 $\mu$m to about 4 $\mu$m, and the secondary particles have a size of about 12 $\mu$m to about 18 $\mu$m; and/or
(ii) a peak intensity ratio I(003)/I(104) of the cathode active material, measured by X-ray diffraction analysis, is about 1.2 to about 4.0, and
an area ratio A(003)/A(104) of the cathode active material, measured by X-ray diffraction analysis, is about 1.1 to about 1.4; and/or
(iii) the secondary particles include a large primary particle layer within two layers.

8. A method of preparing a cathode active material for lithium secondary batteries, the method comprising:

mixing a nickel precursor, at least one selected from an M1 precursor and an M2 precursor, and a basic solution to obtain a mixture, subjecting the mixture to a co-precipitation reaction, and then drying the mixture to obtain a nickel-based metal precursor having pores therein;
obtaining a mixture of the nickel-based metal precursor having pores therein and a lithium precursor;
performing primary heat treatment of the mixture to obtain a product of the primary heat treatment; and
adding a cobalt precursor to the product of the primary heat treatment without a pulverization process of the product, to obtain a mixture, and performing secondary treatment of the mixture to prepare the cathode active material of claim 1 ,
wherein the primary heat treatment is performed at a higher temperature than the secondary heat treatment,
the M1 precursor is at least one selected from a cobalt precursor, a manganese precursor, and an aluminium precursor, and
the M2 precursor is a precursor containing at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr).

9. The method of claim 8, wherein:

(i) the nickel-based metal precursor has a pore region therein, and the size of the pore region is about 2 $\mu$m to about 7 $\mu$m; and/or
(ii) the cobalt precursor is $Co(OH)_2$, $CoOOH$, $CoO$, $Co_2O_3$, $Co_3O_4$, $Co(OCOCH_3)_2 \cdot 4H_2O$, $CoCl_2$, $Co(NO_3)_2 \cdot 6H_2O$, $CoSO_4$, $Co(SO_4)_2 \cdot 7H_2O$, or a combination thereof.

10. The method of claim 8 or claim 9, wherein:

(i) the nickel-based metal precursor is a compound represented by Formula 3 below, a compound represented by Formula 4 below, or a combination thereof:

[Formula 3]        $(Ni_{1-x-y}M1_xM2_y)(OH)_2$

wherein, in Formula 3, M1 is at least one element selected from Co, Mn, and Al,
M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and
$0.6 \leq (1-x-y) < 1$, $0 \leq x < 0.4$, and $0 \leq y < 0.4$ are satisfied, and a case where both x and y are 0 is excluded,

[Formula 4]        $(Ni_{1-x-y}M1_xM2_y)O$

wherein, in Formula 4, M1 is at least one element selected from Co, Mn, and Al,
M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and
$0.6 \leq (1-x-y) < 1$, $0 \leq x < 0.4$, and $0 \leq y < 0.4$ are satisfied, and a case where both x and y are 0 is excluded; or

(ii) the nickel-based metal precursor is a compound represented by Formula 5 below, a compound represented by Formula 6 below, or a combination thereof:

[Formula 5]        $Ni_{1-x-y-z}Co_xM3_yM4_z(OH)_2$

wherein, in Formula 5, M3 is at least one element selected from Mn, and Al,
M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and
$0.6 \leq (1-x-y-z) < 1$, $0 \leq x < 0.4$, $0 \leq y < 0.4$, and $0 \leq z < 0.4$ are satisfied, and a case where all of x, y, and z are 0 is excluded,

[Formula 6]        $(Ni_{1-x-y-z}Co_xM3_yM4_z)O$

wherein, in Formula 6, M3 is at least one element selected from Mn, and Al,

M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and $0.6 \leq (1-x-y-z) < 1$, $0 \leq x < 0.4$, $0 \leq y < 0.4$, and $0 \leq z < 0.4$ are satisfied, and a case where all of x, y, and z are 0 is excluded.

11. The method of any one of claims 8 to 10, wherein:

    (i) the nickel-based metal precursor and the lithium precursor are mixed such that a molar ratio of Li/Me (Me is an element other than Li, O, and H) is 0.9 or more and less than 1.1; and/or
    (ii) the lithium precursor is lithium hydroxide, lithium carbonate, lithium sulfate, lithium nitrate, or a combination thereof.

12. The method of any one of claims 8 to 11, wherein:

    (i) the primary heat treatment is performed at a temperature of 800 °C to 1200 °C under an oxidizing gas atmosphere; and/or
    (ii) the secondary heat treatment is performed at a temperature of 600 °C to 850 °C under an oxidizing gas atmosphere.

13. A cathode for lithium secondary batteries, the cathode comprising:

    a cathode current collector; and a cathode active material layer on the cathode current collector,
    wherein the cathode active material layer includes: the cathode active material of any one of claims 1 to 7; and at least one selected from large particles and aggregates thereof, the large particles having the same composition as the cathode active material.

14. The cathode of claim 13, wherein:

    (i) the cathode active material includes pores having a size of about 0.5 $\mu$m to about 4 $\mu$m; and/or
    (ii) a greater amount of large particles is included in a surface portion of the cathode than in a central portion of the cathode, the central portion being adjacent to the cathode current collector; and/or
    (iii) a larger amount of a cathode active material having a hollow structure is included in a central portion of the cathode than in a surface portion of the cathode, the central portion being adjacent to the cathode current collector; and/or
    (iv) the cathode includes a cathode active material layer within two layers.

15. A lithium secondary battery comprising: the cathode of claim 13 or claim 14; an anode; and an electrolyte between the cathode and the anode.

FIG. 1A

SDI 5.0kV 8.8mm x5.00k SE(M)      10.0um

FIG. 1B

FIG. 1C

FIG. 2A

FIG. 2B

FIG. 2C

FIG. 2D

# FIG. 3A

SDI 5.0kV 8.6mm x1.50k SE(M,LA10)  30.0um

# FIG. 3B

SDI 5.0kV 8.6mm x5.00k SE(M,LA10)  10.0um

# FIG. 3C

# FIG. 3D

# FIG. 4

# FIG. 5

Co L series

3µm

# FIG. 6

Co L series

5µm

**EUROPEAN SEARCH REPORT**

Application Number

EP 22 19 1015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/311522 A1 (FANG XIANGPENG [CN] ET AL) 29 October 2015 (2015-10-29) | 1-7 | INV. C01G51/00 H01M4/525 |
| A | * paragraph [0016] * <br> * example 7 * <br> ----- | 8-15 | |
| A | EP 3 249 723 B1 (LG CHEMICAL LTD [KR]) 5 December 2018 (2018-12-05) <br> * examples * <br> ----- | 1-15 | |

**TECHNICAL FIELDS SEARCHED (IPC)**

C01G
H01M

The present search report has been drawn up for all claims

| Place of search | Date of completion of the search | Examiner |
|---|---|---|
| Munich | 15 February 2023 | Besana, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 1015

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2023

| Patent document cited in search report | | Publication date | Patent family member(s) | | Publication date |
|---|---|---|---|---|---|
| US 2015311522 | A1 | 29-10-2015 | CN | 105098177 A | 25-11-2015 |
| | | | US | 2015311522 A1 | 29-10-2015 |
| EP 3249723 | B1 | 05-12-2018 | CN | 107251282 A | 13-10-2017 |
| | | | EP | 3249723 A1 | 29-11-2017 |
| | | | JP | 6562576 B2 | 21-08-2019 |
| | | | JP | 2018521456 A | 02-08-2018 |
| | | | KR | 20170038485 A | 07-04-2017 |
| | | | PL | 3249723 T3 | 30-09-2019 |
| | | | US | 2018048015 A1 | 15-02-2018 |
| | | | WO | 2017057900 A1 | 06-04-2017 |

EPO FORM P0459

For more details about this annex : see Official Journal of the European Patent Office, No. 12/82